# EUROPEAN PATENT APPLICATION

(11) **EP 4 297 519 A1**
(43) Date of publication of application: **27.12.2023**
(21) Application number: 22756391.3
(22) Date of filing: 24.01.2022
(51) Int. Cl.: H04W 76/14, H04W 76/28, H04W 72/04, H04W 72/12, H04W 92/18, H04W 76/18, H04W 4/40, H04W 76/30

(54) **METHOD AND DEVICE FOR CONFIGURING SL DRX CONFIGURATION IN NR V2X**

(30) Priority: 17.02.2021 KR 20210021252; 19.02.2021 KR 20210022685; 03.03.2021 KR 20210028275; 03.05.2021 KR 20210057426; 14.06.2021 KR 20210076879; 29.06.2021 KR 20210084917; 05.07.2021 KR 20210087969
(71) Applicant: LG Electronics Inc., Yeongdeungpo-gu Seoul 07336 (KR)
(72) Inventor: HONG, Jongwoo, Seoul 06772 (KR); BACK, Seoyoung, Seoul 06772 (KR); PARK, Giwon, Seoul 06772 (KR); SEO, Hanbyul, Seoul 06772 (KR); LEE, Seungmin, Seoul 06772 (KR)
(74) Representative: Frenkel, Matthias Alexander
(86) International application number: PCT/KR2022/001210
(87) International publication number: WO 2022/177187

(57) **Abstract**

Provided are a method for performing wireless communication by a first device, and a device supporting same. The method may comprise the steps of: establishing a connection between the first device and a second device; transmitting a first radio resource control (RRC) reconfiguration sidelink message including a first sidelink (SL) discontinuous reception (DRX) configuration to the second device, wherein the first SL DRX configuration includes information related to a first SL DRX cycle and information related to a first active time; receiving, from the second device, failure information of the first SL DRX configuration; in response to the failure information, transmitting, to the second device, request information for requesting assistance information for reconfiguration of the first SL DRX configuration; and in response to the request information, receiving the assistance information from the second device.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL PROBLEM

Meanwhile, for example, the TX UE may determine a SL DRX configuration, and the TX UE may transmit the SL DRX configuration to the RX UE. For example, if the TX UE has established an RRC connection with the base station, the TX UE may receive a SL DRX configuration (e.g., a SL DRX configuration determined by the base station) from the base station, and the TX UE may transmit the SL DRX configuration to the RX UE. Meanwhile, if the RX UE receives the SL DRX configuration from the TX UE, the RX UE may need to reject the SL DRX configuration. If the RX UE is unable to reject the SL DRX configuration transmitted by the TX UE, the power saving gain of the RX UE may be reduced by the SL DRX configuration in which the power saving of the RX UE is not considered.

### TECHNICAL SOLUTION

In an embodiment, provided is a method for performing wireless communication by a first device. The method may comprise: establishing a connection between the first device and a second device; transmitting, to a second device, a first radio resource control (RRC) reconfiguration sidelink message including a first sidelink (SL) discontinuous reception (DRX) configuration, the first SL DRX configuration including information related to a SL DRX cycle and information related to a first active time; receiving, from the second device, failure information for the first SL DRX configuration; transmitting, to the second device, request information for requesting assistance information for reconfiguration the first SL DRX configuration, in response to the failure information; and receiving, from the second device, the assistance information, in response to the request information.

In an embodiment, provided is a first device adapted to perform wireless communication. The first device may comprise: one or more memories storing instructions; one or more transceivers; and one or more processors connected to the one or more memories and the one or more transceivers. The one or more processors may execute the instructions to: establish a connection between the first device and a second device; transmit, to a second device, a first radio resource control (RRC) reconfiguration sidelink message including a first sidelink (SL) discontinuous reception (DRX) configuration, the first SL DRX configuration including information related to a SL DRX cycle and information related to a first active time; receive, from the second device, failure information for the first SL DRX configuration; transmit, to the second device, request information for requesting assistance information for reconfiguration the first SL DRX configuration, in response to the failure information; and receive, from the second device, the assistance information, in response to the request information.

### ADVANTAGEOUS EFFECTS

The power saving gain of the UE can be maximized.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows definitions of a UE and a peer UE, based on an embodiment of the present disclosure.
FIG. 9 shows an example of a problem that may occur when an RX UE is unable to reject a SL DRX configuration transmitted by a TX UE, based on an embodiment of the present disclosure.
FIGs. 10 to 12 show procedures for a UE to reset or fall back SL DRX, based on various embodiments of the present disclosure.
FIG. 13 shows definitions of a UE and a peer UE, based on an embodiment of the present disclosure.
FIG. 14 shows a procedure in which a capability message including assistance information or a request for assistance information is transmitted, based on an embodiment of the present disclosure.
FIG. 15 shows a procedure in which an RRC reconfiguration sidelink message including assistance information or a request for assistance information is transmitted, based on an embodiment of the present disclosure.
FIG. 16 shows a procedure in which assistance information or a request for assistance information is transmitted, based on an embodiment of the present disclosure.
FIG. 17 shows a procedure for a UE or a peer UE to transmit or request assistance information after a PC5-RRC connection is established, based on an embodiment of the present disclosure.
FIG. 18 shows a method for performing wireless communication by a first device, based on an embodiment of the present disclosure.
FIG. 19 shows a method for performing wireless communication by a second device, based on an embodiment of the present disclosure.
FIG. 20 shows a communication system 1, based on an embodiment of the present disclosure.
FIG. 21 shows wireless devices, based on an embodiment of the present disclosure.
FIG. 22 shows a signal process circuit for a transmission signal, based on an embodiment of the present disclosure.
FIG. 23 shows another example of a wireless device, based on an embodiment of the present disclosure.
FIG. 24 shows a hand-held device, based on an embodiment of the present disclosure.
FIG. 25 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B': For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B': For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that"PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

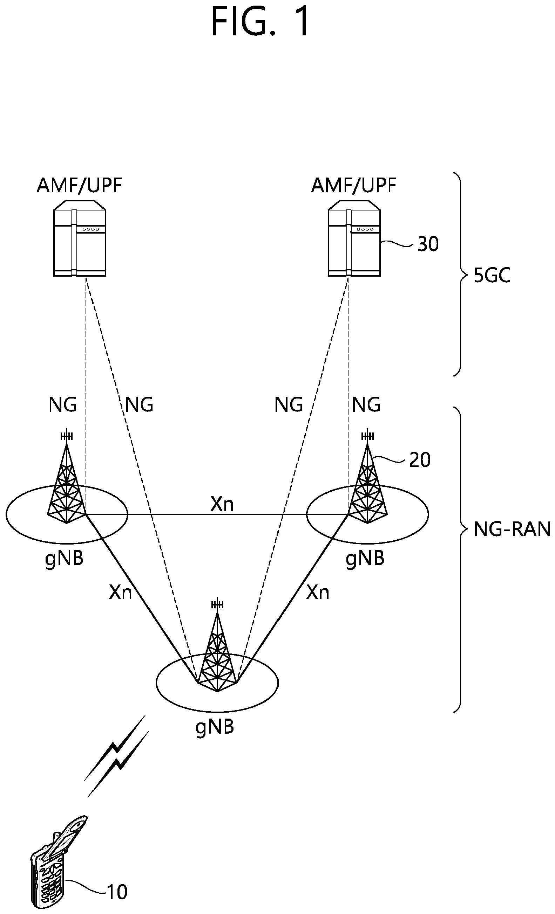

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

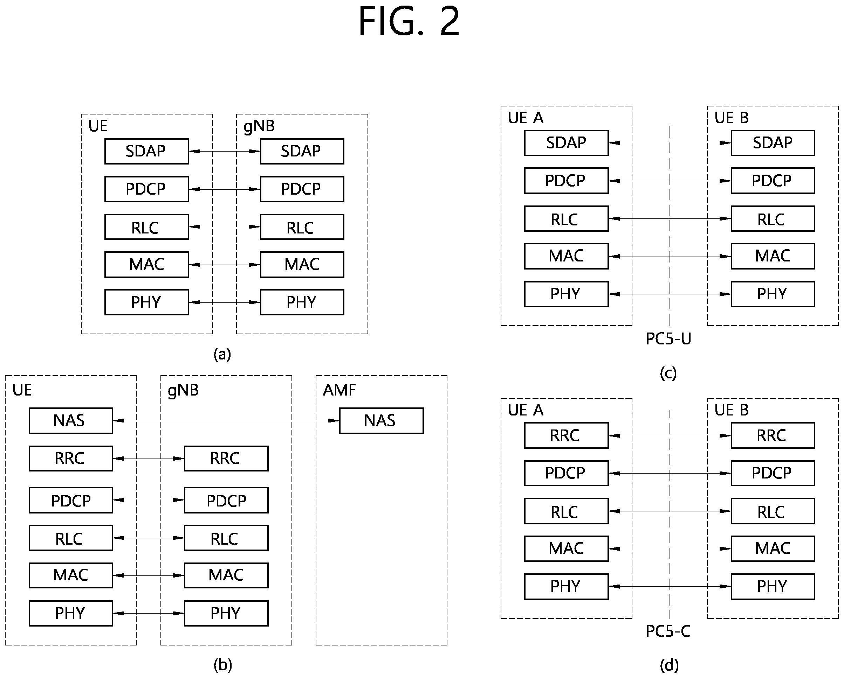

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

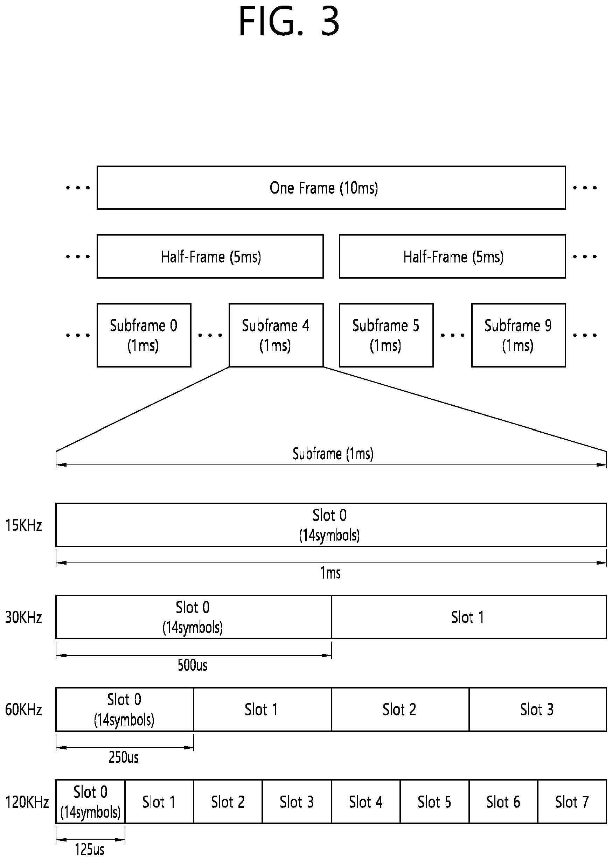

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u} ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

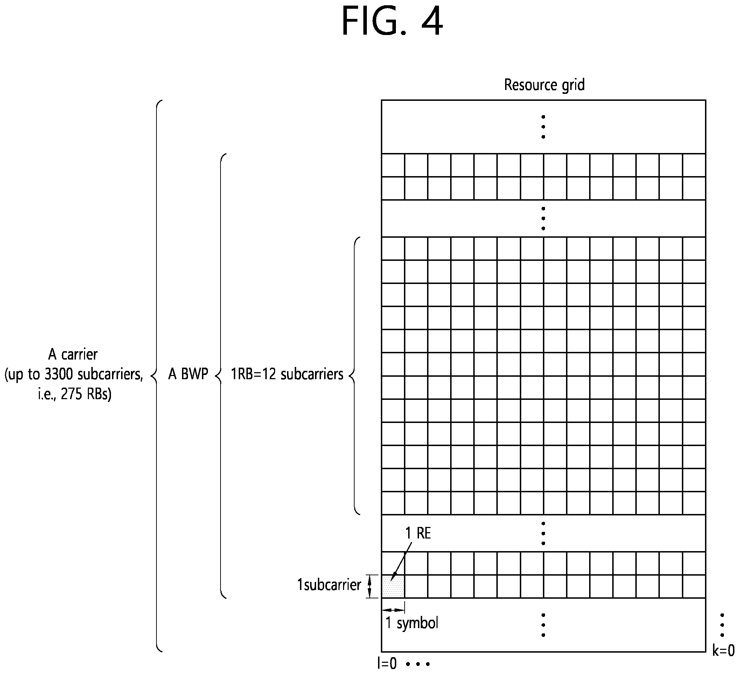

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

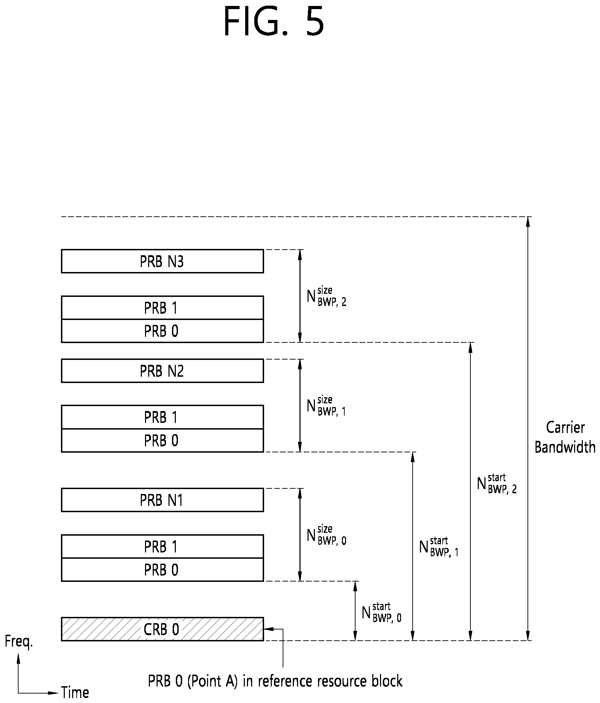

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

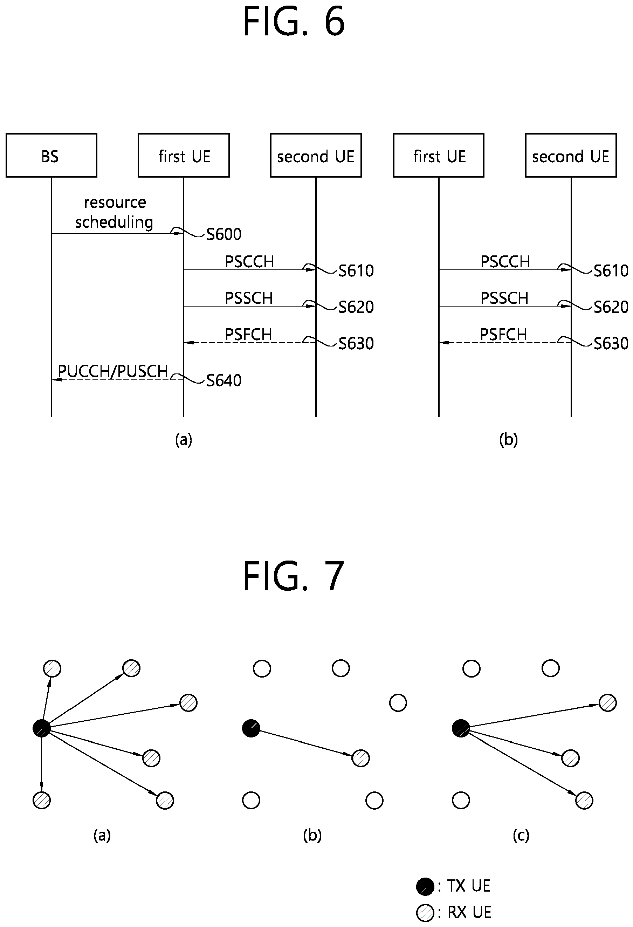

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Referring to standard documents, some procedures and technical specifications related to the present disclosure are as follows. The UE may perform a DRX operation based on Tables 5 to 7. The operations/procedures described in Tables 5 to 7 may be combined with various embodiments of the present disclosure.

**[Table 5]**

| | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | *- drx-onDurationTimer.* the duration at the beginning of a DRX cycle; |
| | - *drx-SlotOffsef:* the delay before starting the *drx-onDurationTimer,* |
| | - *drx-InactivityTimer.* the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset*: the Long DRX cycle and *drx-StartOffset* which defines the subframe where the Long and Short DRX cycle starts; |
| | - *drx-ShortCycle* (optional): the Short DRX cycle; |
| | - *drx-ShortCycleTimer* (optional): the duration the UE shall follow the Short DRX cycle; |
| | - *drx-HARQ-RTT-TimerDL* (per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated drx-*onDurationTimer* in case DCP is monitored but not detected; |
| | - *ps-TransmitOtherPeriodicCSI* (optional): the configuration to report periodic CSI that is not L1-RSRP on PUCCH during the time duration indicated by *drx-onDurationTimer* in case DCP is configured but associated drx-*onDurationTimer* is not started; |
| | - *ps-TransmitPeriodicLl-RSRP* (optional): the configuration to transmit periodic CSI that is L1-RSRP on PUCCH during the time duration indicated by *drx-onDurationTimer* in case DCP is configured but associated drx-*onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. | |
| When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SiotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |
| When a DRX cycle is configured, the Active Time for Serving Cells in a DRX group includes the time while: | |
| | - *drx-onDurationTimeror drx-InactivityTimer* configured for the DRX group is running; or |
| | - *drx-RetransmissionTimerDL* or *drx-RetransmissionTimerUL* is running on any Serving Cell in the DRX group; or |
| | - *ra-ContentionResolutionTimer* (as described in clause 5.1.5) or *msgB-ResponseWindow* (as described in clause 5.1.4a) is running; or |
| | - a Scheduling Request is sent on PUCCH and is pending (as described in clause 5.4.4); or |
| | - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a. |

**[Table 6]**

| | | | | |
|---|---|---|---|---|
| When DRX is configured, the MAC entity shall: | | | | |
| | | 1> if a MAC PDU is received in a configured downlink assignment: | | |
| | | | 2> start the *drx-HARQ-RTT-TimerDL* for the corresponding HARQ process in the first symbol after the end of the corresponding transmission carrying the DL HARQ feedback; | |
| | | | 2> stop the *drx-RetransmissionTimerDL* for the corresponding HARQ process. | |
| | | 1> if a MAC PDU is transmitted in a configured uplink grant and LBT failure indication is not received from lower layers: | | |
| | | | 2> start the *drx-HARQ-RTT-TimerUL* for the corresponding HARQ process in the first symbol after the end of the first repetition of the corresponding PUSCH transmission; | |
| | | | 2> stop the *drx-RetransmissionTimerUL* for the corresponding HARQ process. | |
| | | 1> if a *drx-HARQ-RTT-TimerDL* expires: | | |
| | | | 2> if the data of the corresponding HARQ process was not successfully decoded: | |
| | | | | 3> start the *drx-RetransmissionTimerDL* for the corresponding HARQ process in the first symbol after the expiry of *drx-HARQ-RTT-TimerDL.* |
| | | 1> if a *drx-HARQ-RTT-TimerUL* expires: | | |
| | | | 2> start the *drx-RetransmissionTimerUL* for the corresponding HARQ process in the first symbol after the expiry of *drx-HARQ-RTT-TimerUL.* | |
| | | 1> if a DRX Command MAC CE or a Long DRX Command MAC CE is received: | | |
| | | | 2> stop *drx-onDurationTimer* for each DRX group; | |
| | | | 2> stop *drx-InactivityTimer* for each DRX group. | |
| | | 1> if *drx-InactivityTimer* for a DRX group expires: | | |
| | | | 2> if the Short DRX cycle is configured: | |
| | | | | 3> start or restart *drx-ShortCycleTimer* for this DRX group in the first symbol after the expiry of *drx-InactivityTimer,* |
| | | | | 3> use the Short DRX cycle for this DRX group. |
| | | | 2> else: | |
| | | | | 3> use the Long DRX cycle for this DRX group. |
| | | 1> if a DRX Command MAC CE is received: | | |
| | | | 2> if the Short DRX cycle is configured: | |
| | | | | 3> start or restart *drx-ShortCycleTimer* for each DRX group in the first symbol after the end of DRX Command MAC CE reception; |
| | | | | 3> use the Short DRX cycle for each DRX group. |
| | | | 2> else: | |
| | | | | 3> use the Long DRX cycle for each DRX group. |
| | | 1> if *drx-ShortCycleTimer* for a DRX group expires: | | |
| | | | 2> use the Long DRX cycle for this DRX group. | |
| | | 1> if a Long DRX Command MAC CE is received: | | |
| | | | 2> stop *drx-ShortCycleTimer* for each DRX group; | |
| | | | 2> use the Long DRX cycle for each DRX group. | |
| | | 1> if the Short DRX cycle is used for a DRX group, and [(SFN × 10) + subframe number] modulo (*drx-ShortCycle*) = (*drx-StartOffset*) modulo (*drx-ShortCycle*)*:* | | |
| | | | 2> start *drx-onduration Timer* for this DRX group after *drx-SlotOffset* from the beginning of the subframe. | |
| | | 1> if the Long DRX cycle is used for a DRX group, and [(SFN × 10) + subframe number] modulo (*drx-LongCycle*) = *drx-StartOffset*: | | |
| | | | 2> if DCP monitoring is configured for the active DL BWP as specified in TS 38.213 [6], clause 10.3: | |
| | | | | 3> if DCP indication associated with the current DRX cycle received from lower layer indicated to start *drx-onDurationTimer,* as specified in TS 38.213 [6]; or |
| | | | | 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms |
| | | | | prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or |
| | | | 3> if *ps-Wakeup* is configured with value *true* and DCP indication associated with the current DRX cycle has not been received from lower layers: | |
| | | | | 4> start *drx-onDurationTimer* after *drx-SlotOffset* from the beginning of the subframe. |
| | | 2> else: | | |
| | | | 3> start *drx-onDurationTimer* for this DRX group after *drx-S*/*otOffset* from the beginning of the subframe. | |
| | NOTE 2: In case of unaligned SFN across carriers in a cell group, the SFN of the SpCell is used to calculate the DRX duration. | | | |

**[Table 7]**

| | | | | |
|---|---|---|---|---|
| | 1> if a DRX group is in Active Time: | | | |
| | | 2> monitor the PDCCH on the Serving Cells in this DRX group as specified in TS 38.213 [6]; | | |
| | | 2> if the PDCCH indicates a DL transmission: | | |
| | | | 3> start the *drx-HARQ-RTT-TimerDL* for the corresponding HARQ process in the first symbol after the end of the corresponding transmission carrying the DL HARQ feedback; | |
| | NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. | | | |
| | | | 3> stop the *drx-RetransmissionTimerDL* for the corresponding HARQ process. | |
| | | | 3> if the PDSCH-to-HARQ_feedback timing indicate a non-numerical k1 value as specified in TS 38.213 [6]: | |
| | | | | 4> start the *drx-RetransmissionTimerDL* in the first symbol after the PDSCH transmission for the corresponding HARQ process. |
| | | 2> if the PDCCH indicates a UL transmission: | | |
| | | | 3> start the *drx-HARQ-RTT-TimerUL* for the corresponding HARQ process in the first symbol after the end of the first repetition of the corresponding PUSCH transmission; | |
| | | | 3> stop the *drx-RetransmissionTimerUL* for the corresponding HARQ process. | |
| | | 2> if the PDCCH indicates a new transmission (DL or UL) on a Serving Cell in this DRX group: | | |
| | | | 3> start or restart *drx-InactivityTimer* for this DRX group in the first symbol after the end of the PDCCH reception. | |
| | | 2> if a HARQ process receives downlink feedback information and acknowledgement is indicated: | | |
| | | | 3> stop the *drx-RetransmissionTimerUL* for the corresponding HARQ process. | |
| | 1> if DCP monitoring is configured for the active DL BWP as specified in TS 38.213 [6], clause 10.3; and | | | |
| | 1> if the current symbol n occurs within *drx-onDurationTimer* duration; and | | | |
| | 1> if *drx-onDurationTimer* associated with the current DRX cycle is not started as specified in this clause: | | | |
| | | 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause: | | |
| | | | 3> not transmit periodic SRS and semi-persistent SRS defined in TS 38.214 [7]; | |
| | | | 3> not report semi-persistent CSI configured on PUSCH; | |
| | | | 3> if *ps-TransmitPeriodicL1-RSRP is* not configured with value *true*: | |
| | | | | 4> not report periodic CSI that is L1-RSRP on PUCCH. |
| | | | 3> if *ps-TransmitOtherPeriodicCSI* is not configured with value *true*: | |
| | | | | 4> not report periodic CSI that is not L1-RSRP on PUCCH. |
| | 1> else: | | | |
| | | 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause: | | |
| | | | 3> not transmit periodic SRS and semi-persistent SRS defined in TS 38.214 [7] in this DRX group; | |
| | | | 3> not report CSI on PUCCH and semi-persistent CSI configured on PUSCH in this DRX group. | |
| | | 2> if CSI masking (*csi-Mask*) is setup by upper layers: | | |
| | | | 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and | |
| | | | | 4> not report CSI on PUCCH in this DRX group. |
| | | NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). | | |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. | | | | |
| The MAC entity needs not to monitor the PDCCH if it is not a complete PDCCH occasion (e.g. the Active Time starts or ends in the middle of a PDCCH occasion). | | | | |

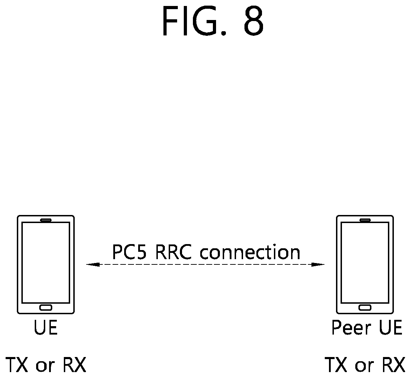

FIG. 8 shows definitions of a UE and a peer UE, based on an embodiment of the present disclosure. The embodiment of FIG. 8 may be combined with various embodiments of the present disclosure.

In the present disclosure, for example, the peer UE may be a UE that has established a PC5 RRC connection and/or PC5-signaling for unicast communication. For example, the peer UE may be a UE that intends to establish a PC5 RRC connection and/or PC5-signaling for unicast communication. For example, the peer UE may be a UE that is establishing a PC5 RRC connection and/or PC5-signaling for unicast communication. For example, the UE may transmit or receive SL data, and the peer UE may transmit or receive SL data. Therefore, the UE may assign/configure a SL DRX configuration to the peer UE, and vice versa, the peer UE may assign/configure a SL DRX configuration to the UE. The operation of the UE described in the present disclosure may also be applied to the peer UE. The operation of the TX UE and the RX UE described in the present disclosure may be applied to both the UE and the peer UE. Furthermore, all the operations and procedures described in the present disclosure applied by the UE to the peer UE may be applied by the peer UE to the UE.

Meanwhile, for example, the TX UE may determine a SL DRX configuration, and the TX UE may transmit the SL DRX configuration to the RX UE. For example, if the TX UE has established an RRC connection with the base station, the TX UE may receive a SL DRX configuration (e.g., a SL DRX configuration determined by the base station) from the base station, and the TX UE may transmit the SL DRX configuration to the RX UE. Meanwhile, if the RX UE receives the SL DRX configuration from the TX UE, the RX UE may need to reject the SL DRX configuration. If the RX UE is unable to reject the SL DRX configuration transmitted by the TX UE, the power saving gain of the RX UE may be reduced by the SL DRX configuration in which the power saving of the RX UE is not considered.

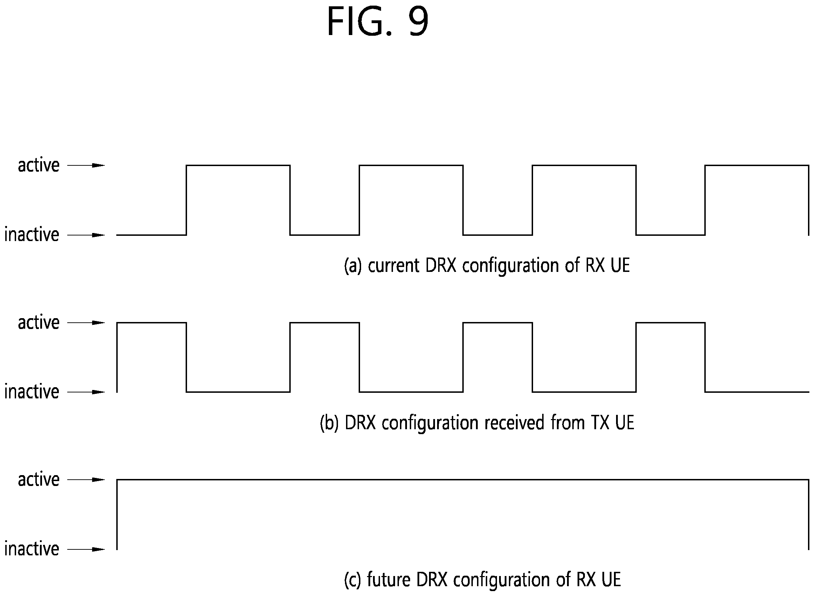

FIG. 9 shows an example of a problem that may occur when an RX UE is unable to reject a SL DRX configuration transmitted by a TX UE, based on an embodiment of the present disclosure. The embodiments of FIG. 9 may be combined with various embodiments of the present disclosure.

(a) of FIG. 9 shows the current SL DRX configuration of the RX UE, and (b) of FIG. 9 shows the SL DRX configuration transmitted by the TX UE. If the RX UE should always accept the SL DRX configuration transmitted by the TX UE, the RX UE should apply the DRX configuration as shown in (c) of FIG. 9 to perform communication. In this case, the power consumption of the RX UE may be large, and the DRX operation of the RX UE may become meaningless. Therefore, in certain situations, the RX UE may need to reject the SL DRX configuration transmitted by the TX UE.

Based on various embodiments of the present disclosure, a method and apparatus are described that efficiently support the SL DRX operation when the peer UE transmits rejection information for the SL DRX configuration.

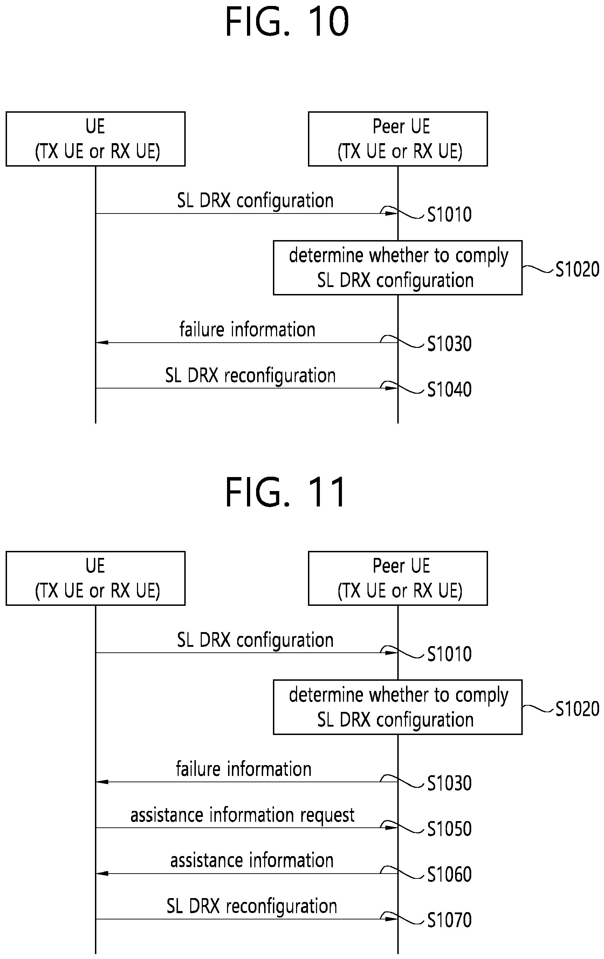

FIGs. 10 to 12 show procedures for a UE to reset or fall back SL DRX, based on various embodiments of the present disclosure. The embodiments of FIGs. 10 to 12 may be combined with various embodiments of the present disclosure.

In the embodiments of FIGs. 10 to 12, a connection may be established between the UE and the peer UE.

Referring to FIGs. 10 to 12, in step S1010, in consideration of unicast, the peer UE may receive a SL DRX configuration from the UE. For example, the peer UE may receive an RRC reconfiguration sidelink message including the SL DRX configuration from the UE.

In step S1020, the peer UE may determine whether or not to comply with the SL DRX configuration. In this process, if the peer UE fails to comply with (some of) the SL DRX configuration, the peer UE may transmit an RRC reconfiguration failure sidelink message to the UE in response. For example, if the peer UE fails to comply (some of) the SL DRX configuration included in the RRC reconfiguration sidelink message, the peer UE may transmit the RRC reconfiguration failure sidelink message to the UE in response to the RRC reconfiguration sidelink message.

In step S1030, the peer UE may transmit the RRC reconfiguration failure sidelink message. In this case, since the peer UE fails to comply with the SL DRX configuration, the peer UE may include information (e.g., indication, notification, message) in the RRC reconfiguration failure sidelink message to indicate to the UE that the SL DRX configuration failed (due to not being complied). For example, since the peer UE fails to comply with the SL DRX configuration, the peer UE may include information (e.g., indication, notification, message) in a separate message to indicate to the UE that the SL DRX configuration failed (due to not being complied). For example, the peer UE may include a recommended DRX configuration that the peer UE can comply in the message and transmit it to the UE. For example, the peer UE may include a preferred DRX configuration that the peer UE can accept in the message and transmit it to the UE.

For example, the peer UE may inform the UE that it is unable to comply with the SL DRX configuration. In this case, for example, the peer UE may fall back to a common DRX configuration and/or a default DRX configuration, and the peer UE may perform monitoring based on the common DRX configuration and/or the default DRX configuration. For example, if the peer UE is not monitoring based on the common and/or default DRX, the peer UE may fall back to a common DRX configuration and/or a default DRX configuration, and the peer UE may perform monitoring based on the common DRX configuration and/or the default DRX configuration.

For example, if the UE configures SL DRX, the UE that receives DRX configuration failure information may know that the peer UE is unable to comply with the SL DRX configuration, and the UE may perform the following operation directly. In this case, unlike the legacy reconfiguration failure operation, the UE may not notify the network of the failure.

Referring to FIG. 10, in step S1040, the UE may directly reconfigure a SL DRX configuration to the peer UE. For example, if the peer UE transmits the recommended DRX configuration or the preferred DRX configuration to the UE in step S1030, the UE may reconfigure a SL DRX configuration directly to the peer UE based on the recommended DRX configuration or the preferred DRX configuration. For example, if the peer UE does not transmit the recommended DRX configuration or the preferred DRX configuration to the UE in step S1030, the UE may reconfigure a SL DRX configuration (e.g., a SL DRX configuration that is different from the SL DRX configuration transmitted in S1010) directly to the peer UE. Specifically, for example, if the SL DRX configuration with the highest priority among the plurality of SL DRX configurations is rejected by the peer UE, the UE may transmit a SL DRX configuration with the next highest priority to the peer UE.

Referring to FIG. 11, in step S1050, the UE may request assistance information for reconfiguring the SL DRX configuration or a compliable (recommended) SL DRX configuration from the peer UE. In step S1060, in response to the assistance information request, the UE may receive the assistance information from the peer UE. For example, the assistance information may include a recommended DRX configuration that can be complied with the peer UE. For example, the assistance information may include a preferred DRX configuration that can be complied with the peer UE. In step S1070, the UE may reconfigure the SL DRX configuration to the peer UE. For example, the UE may reconfigure the SL DRX configuration to the peer UE based on the assistance information.

In the above-described embodiments, for example, when the UE reconfigures the SL DRX configuration to the peer UE, the UE may keep a SL DRX configuration previously configured/used (for unicast) (e.g., prior to corresponding RRC reconfiguration).

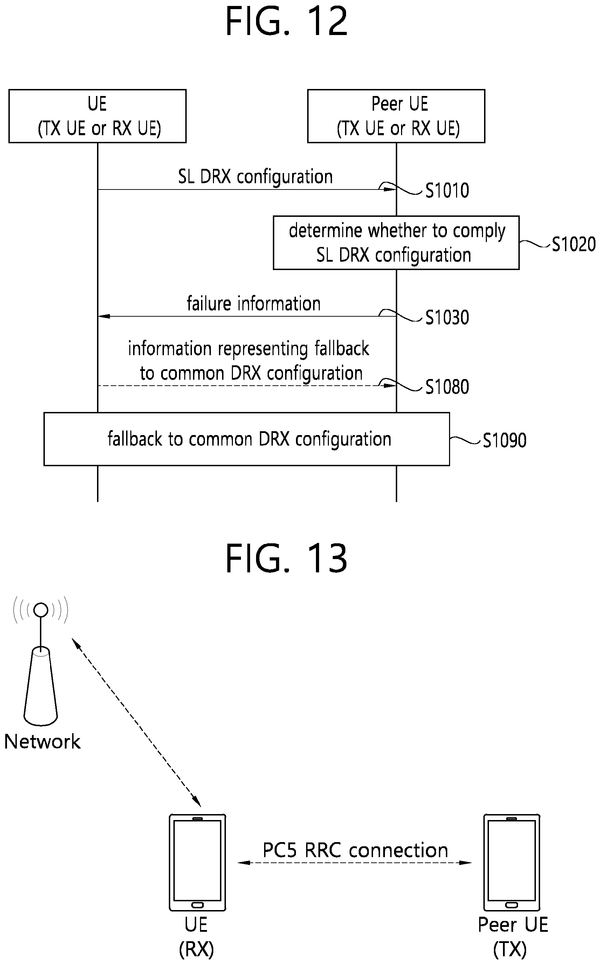

Referring to FIG. 12, in step S1080, the UE may inform the peer UE that it will perform (fallback) transmission based on the common DRX and/or the default DRX. In step S1090, the UE may transmit SL data based on the common DRX and/or the default DRX.

For example, if the network configures the SL DRX of the peer UE, although not shown in FIGs. 10 to 12, in step S1030, if the UE receives the DRX configuration failure from the peer UE, the UE may transmit a cause indicating that the DRX configuration failed to the network. Thereafter, a SL DRX configuration of the peer UE may be reconfigured from the network to the UE.

Specifically, for example, information related to the DRX configuration failure received by the UE from the peer UE may include information related to a DRX configuration preferred by the peer UE and/or information related to a DRX configuration not preferred by the peer UE. For example, the information related to the DRX configuration preferred by the peer UE may include at least one of information related to a DRX cycle preferred by the peer UE, information related to an active time preferred by the peer UE, information related to an inactive time preferred by the peer UE, and/or information related to a DRX pattern preferred by the peer UE. For example, the information related to the DRX configuration not preferred by the peer UE may include at least one of information related to a DRX cycle not preferred by the peer UE, information related to an active time not preferred by the peer UE, information related to an inactive time not preferred by the peer UE, and/or information related to a DRX pattern not preferred by the peer UE. For example, the peer UE may transmit, to the UE through SCI, a MAC CE, or an RRC message (e.g., UE assistance information), the information related to the DRX configuration failure including the information related to the DRX configuration preferred by the peer UE and/or the information related to the DRX configuration not preferred by the peer UE. For example, to reduce signaling overhead, a mapping relationship between the DRX configuration preferred by the peer UE and/or the DRX configuration not preferred by the peer UE and at least one index may be configured or pre-configured for the UE, the peer UE and the network. For example, a mapping relationship between the DRX configuration preferred by the peer UE and a plurality of indices may be configured or pre-configured for the UE, the peer UE and the network as shown in Table 8. For example, a mapping relationship between the DRX configuration not preferred by the peer UE and a plurality of indices may be configured or pre-configured for the UE, the peer UE and the network as shown in Table 9. In the embodiments of Table 8 and Table 9, it is assumed that four DRX configurations are related to four indices, but the technical ideas of the present disclosure are not limited thereto. That is, at least one DRX configuration may be mapped to at least one index.

**[Table 8]**

| Index | DRX Configuration |
|---|---|
| 00 | Preferred DRX Configuration #1 |
| 01 | Preferred DRX Configuration #2 |
| 10 | Preferred DRX Configuration #3 |
| 11 | Preferred DRX Configuration #4 |

**[Table 9]**

| Index | DRX Configuration |
|---|---|
| 00 | Non-Preferred DRX Configuration #1 |
| 01 | Non-Preferred DRX Configuration #2 |
| 10 | Non-Preferred DRX Configuration #3 |
| 11 | Non-Preferred DRX Configuration #4 |

For example, when receiving the information related to the DRX configuration failure from the peer UE, the UE may transmit information related to a failure of the DRX configuration (i.e., a cause indicating that the DRX configuration failed) to the network. Specifically, for example, the information related to the failure of the DRX configuration may include at least one of information related to a DRX configuration preferred by the peer UE, information related to a DRX configuration not preferred by the peer UE, information related to a DRX configuration preferred by the UE, and/or information related to a DRX configuration not preferred by the UE. Herein, for example, the information related to the DRX configuration may include at least one of information related to a DRX cycle, information related to an active time, information related to an inactive time, and/or information related to a DRX pattern. As described above, to reduce signaling overhead, a mapping relationship between the DRX configuration preferred by the peer UE or the UE and/or the DRX configuration not preferred by the peer UE or the UE and at least one index may be configured or pre-configured for the UE, the peer UE and the network.

For example, the network may receive, from the UE, the information related to the failure of the DRX configuration (i.e., a cause indicating that the DRX configuration failed). In this case, for example, the network may determine a new DRX configuration based on at least one of the information related to the DRX configuration preferred by the peer UE, the information related to the DRX configuration not preferred by the peer UE, the information related to the DRX configuration preferred by the UE, and/or the information related to the DRX configuration not preferred by the UE. For example, the network may determine a new DRX configuration based on at least one of the information related to the DRX configuration preferred by the peer UE, the information related to the DRX configuration not preferred by the peer UE, the information related to the DRX configuration preferred by the UE, the information related to the DRX configuration not preferred by the UE, information related to a DRX configuration preferred by a third UE, and/or information related to a DRX configuration not preferred by the third UE. Herein, for example, the third UE may be another UE within coverage of the network other than the UE and the peer UE. Thereafter, the network may transmit the new DRX configuration to the UE. In addition, the UE may transmit the new DRX configuration received from the network to the peer UE. In this way, the network can determine DRX configuration(s) preferred or non-preferred by the at least one UE within its coverage, and the network can determine the DRX configuration by comprehensively considering the channel congestion situation, the power saving operation preferred by the at least one UE, etc. Thus, channel congestion can be reduced while maximizing the power saving efficiency of the UE.

Based on an embodiment of the present disclosure, when the UE operates by configuring a SL DRX configuration to the peer UE based on unicast, a timer may be configured for each unicast DRX by considering a case where a PC5 link is unavailable (e.g., RLF declaration). For example, the timer may be configured at the same time as the UE configures the SL DRX configuration. For example, the timer may expire if reception of SL data does not occur for a certain period of time (from the perspective of the UE and/or the peer UE). For example, after the timer expires, the SL DRX configuration configured based on unicast may be released, and the UE and/or the peer UE may operate (e.g., perform SL communication) based on common DRX and/or default DRX. For example, if the timer expires, even if no information indicating the fallback is transmitted or received in step S1080, the SL DRX configuration configured based on unicast may be released, and the UE and/or the peer UE may operate (e.g., perform SL communication) based on common DRX and/or default DRX.

For example, if the peer UE determines that the unicast DRX configuration is no longer used (e.g., SL RLF), the UE may no longer monitor unicast DRX in an active time of operating with common DRX, and the UE may transmit, to the peer UE, an indication, a notification, or a message requesting a release.

Based on various embodiments of the present disclosure, if the RX UE that receives a SL DRX configuration from the TX UE determines that the RX UE cannot comply with the SL DRX configuration, the RX UE may reject the SL DRX configuration. For example, the RX UE may reject the SL DRX configuration if the SL DRX configuration transmitted by the TX UE causes significant battery consumption of the RX UE. In the above case, the RX UE may transmit information related to a preferred SL DRX configuration to the TX UE by including it in information related to the rejection, or the RX UE may transmit assistance information to the TX UE that includes information related to a preferred SL DRX configuration in response to an assistance information request transmitted by the TX UE. Through such operation, an efficient SL DRX configuration can be configured to the RX UE.

Meanwhile, in the case of unicast, communication may be performed based on the PC5-RRC connection, and the RX UE may perform the DRX operation. Meanwhile, in Rel-16, only the TX UE can determine and declare radio link failure (SL RLF). In this case, if SL RLF occurs, a UE receiving SL data does not know that SL RLF has occurred and may continue to perform the DRX operation for the UE or the destination in which the unicast connection is established. This unnecessary DRX operation may result in additional power consumption upon wake-up. The present disclosure describes when/how the RX UE determines that SL RLF has occurred and does not perform the SL DRX operation.

FIG. 13 shows definitions of a UE and a peer UE, based on an embodiment of the present disclosure. The embodiment of FIG. 13 may be combined with various embodiments of the present disclosure.

In the present disclosure, for example, the peer UE may be a UE that has established a PC5 RRC connection and/or PC5-signaling for unicast communication. For example, the peer UE may be a UE that intends to establish a PC5 RRC connection and/or PC5-signaling for unicast communication. For example, the peer UE may be a UE that is establishing a PC5 RRC connection and/or PC5-signaling for unicast communication. Herein, the UE may refer to a UE that is connected with a network for convenience, and the peer UE may also be connected with the network. Alternatively, it is possible that neither the UE nor the peer UE is connected with the network. It is assumed that the UE performs a SL reception operation and a DRX operation, and the peer UE performs a SL transmission operation. It is also possible that both the UE and the peer UE are in an RRC_IDLE/INACTIVE state or an RRC_CONNECTED state.

### 1. Proposal considering a timer of the RX UE

Procedure 1-1. The UE and the peer UE may establish a PC5-RRC/PC5-S connection. The UE may determine a DRX configuration for SL unicast transmission to the peer UE, and the UE may configure the DRX configuration to the peer UE. Alternatively, the peer UE may determine a DRX configuration, and the peer UE may configure the DRX configuration to the UE. The DRX configuration may be configured per a pair of a source and a destination.

Procedure 1-2. The UE receiving SL data may start a timer for the DRX operation while performing the reception of SL data from the destination (or the peer UE). The timer for the DRX operation may be configured through the following procedure. For example, the timer for the DRX operation may be configured through a SL pre-configuration. For example, the timer for the DRX operation may be received from the network through a SIB. For example, the timer for the DRX operation may be received from the network through a dedicated configuration.

Procedure 1-3. The (re)start condition of the timer for the DRX operation may be as follow. For example, when the RX UE start the DRX operation or receives SL data, the RX UE may start the timer. For example, when SL data is received from the destination (or the peer UE), the timer may be restarted.

Procedure 1-4. If the UE receiving SL data does not receive SL data from the peer UE for a certain time, the RX UE may determine that SL RLF occurs, and the RX UE may expire the running timer. The RX UE may then perform the procedure below.

Alternatively, if the RX UE does not receive SL data from the TX UE for a pre-configured threshold time, the RX UE may transmit a link status checking message to the TX UE within a pre-configured UE common wake-up time (for broadcast (and/or groupcast)). Thereafter, if no response to the message is received (within the pre-configured threshold time) within the UE common wake-up time (and/or a (unicast) wake-up time related to an L2 source/destination ID pair of the TX UE and the RX UE), the RX UE may perform the procedure below.
- The RX UE may release the PC5-RRC connection established with the destination (or the peer UE or the source/destination ID pair).
- The RX UE may release the DRX configuration operated for the destination (or the peer UE).
- The RX UE may not perform the DRX operation operated for the destination (or the peer UE).
- The RX UE may discard the NR sidelink communication related DRX configuration of this destination.

Procedure 1-5. Herein, as further example, the RX UE (in the RRC CONNECTED state) may be configured to report corresponding status information (e.g., PC5-RRC connection (and/or DRX configuration) release, RLF occurrence) to its serving cell/base station. For example, the reporting of the status information may include a cause of the SL failure (e.g., RLF, DRX configuration release) and the source/destination ID pair. For example, the status information may be reported through a sidelink UE information NR message or a UE assistance information message.

### 2. Proposal for indication by an upper layer of the RX UE

Procedure 1-1. The UE and the peer UE may establish a PC5-RRC/PC5-S connection. The UE may determine a DRX configuration for SL unicast transmission to the peer UE, and the UE may configure the DRX configuration to the peer UE. Alternatively, the peer UE may determine a DRX configuration, and the peer UE may configure the DRX configuration to the UE. The DRX configuration may be configured per a pair of a source and a destination.

Procedure 2-2. If the upper layer (e.g., V2X layer) of the UE receiving SL data does not receive a keep-alive message from the peer UE for a certain time, the upper layer may determine that SL RLF occurs. In this case, the upper layer may expire a timer, and the upper layer may transfer an indication to a lower layer (e.g., RRC layer). Alternatively, the upper layer may transfer an indication regardless of whether it receives a keep-alive message.

Procedure 2-3. The UE receiving SL data that has received the indication (for the destination or the peer UE) from the upper layer may perform the following procedure.
- The RX UE may release the PC5-RRC connection established with the destination (or the peer UE or the source/destination ID pair).
- The RX UE may release the DRX configuration operated for the destination (or the peer UE).
- The RX UE may not perform the DRX operation operated for the destination (or the peer UE).
- The RX UE may discard the NR sidelink communication related DRX configuration of this destination.

Procedure 2-4. Herein, as further example, the RX UE (in the RRC CONNECTED state) may be configured to report corresponding status information (e.g., PC5-RRC connection (and/or DRX configuration) release, RLF occurrence) to its serving cell/base station. For example, the reporting of the status information may include a cause of the SL failure (e.g., RLF, DRX configuration release) and the source/destination ID pair. For example, the status information may be reported through a sidelink UE information NR message or a UE assistance information message.

Meanwhile, for a UE connected with a base station in the mode 1 and/or the mode 2, there is the issue of how to align a SL DRX configuration with a Uu DRX configuration. This is included in the work item in Table 10.

**[Table 10]**

| |
|---|
| The objective of this work item is to specify radio solutions that can enhance NR sidelink for the V2X, public safety and commercial use cases. |
| 1. Sidelink DRX for broadcast, groupcast, and unicast [RAN2] |
| - Define on- and off-durations in sidelink and specify the corresponding UE procedure |
| - Specify mechanism aiming to align sidelink DRX wake-up time among the UEs communicating with each other |
| - Specify mechanism aiming to align sidelink DRX wake-up time with Uu DRX wake-up time in an in-coverage UE |

In the present disclosure, aligning Uu DRX and SL DRX may mean configuring on-durations to be adjacent from a timing perspective so that the UE can wake up once to receive a PDCCH/PSCCH or a PSCCH/PDCCH. Herein, the adjacent may mean that the on-durations of the Uu DRX and the SL DRX are located on the time domain within a pre-determined time (t>=0).

Meanwhile, in out-of-coverage, a UE transmitting a DRX configuration may determine the DRX configuration. For example, for unicast and for out-of-coverage, the UE transmitting a DRX configuration may determine the DRX configuration. For example, when the UE determines the DRX configuration, a pre-configuration and/or assistance information from a peer UE may be considered. For example, when the UE determines the DRX configuration, a pre-configuration and/or assistance information from a peer UE may not be considered. In view of the above, even in in-coverage, a condition needs to be defined for when the UE determines the DRX configuration and when the UE transmits the DRX configuration.

### 3. skipping assistance information exchange for DRX setup

Procedure 3-1. The UE and the peer UE may establish a PC5-RRC connection for unicast transmission. In this case, a DRX configuration may also be established. The UE may transmit assistance information to the peer UE for the DRX configuration, or the UE may transmit a request for assistance information to the peer UE. The assistance information may be transmitted based on the PC5 RRC message and/or PC5 signaling as described below when transmitting V2X data (e.g., generated from an upper layer).
- PC5 RRC message: transmitting by being embedded in a UECapabilityEnquirySidelink message or a UECapabilityInformationSidelink message (i.e., octet string) or defined as a new element
- PC5 RRC message: transmitting by being embedded in a PC5-RRC reconfiguration sidelink message (i.e., octet string) or defined as a new element
- PC5 RRC message: defining a new PC5 RRC message, such as assistance information request or assistance information
- Transmitting through PC5 signaling

For example, the UE may establish the PC5-RRC connection for unicast transmission with the peer UE under the following condition. For example, if unicast V2X data comes down from the upper layer and needs to be transmitted, the UE may establish the PC5-RRC connection for unicast transmission with the peer UE. For example, if the peer UE performs a PC5 RRC reconfiguration procedure, the UE may establish the PC5-RRC connection for unicast transmission with the peer UE. For example, if establishment of the PC5-RRC connection is required for V2X data transmission, the UE may establish the PC5-RRC connection for unicast transmission with the peer UE.

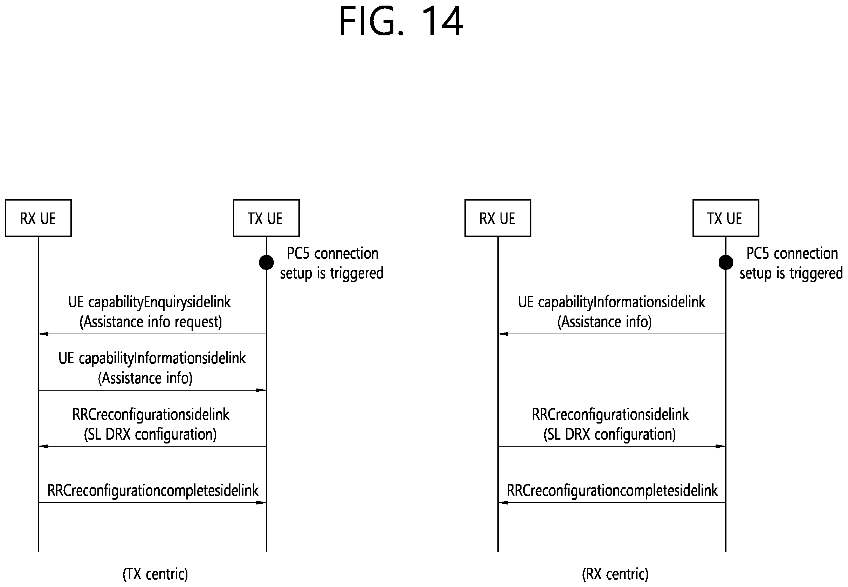

FIG. 14 shows a procedure in which a capability message including assistance information or a request for assistance information is transmitted, based on an embodiment of the present disclosure. The embodiment of FIG. 14 may be combined with various embodiments of the present disclosure.

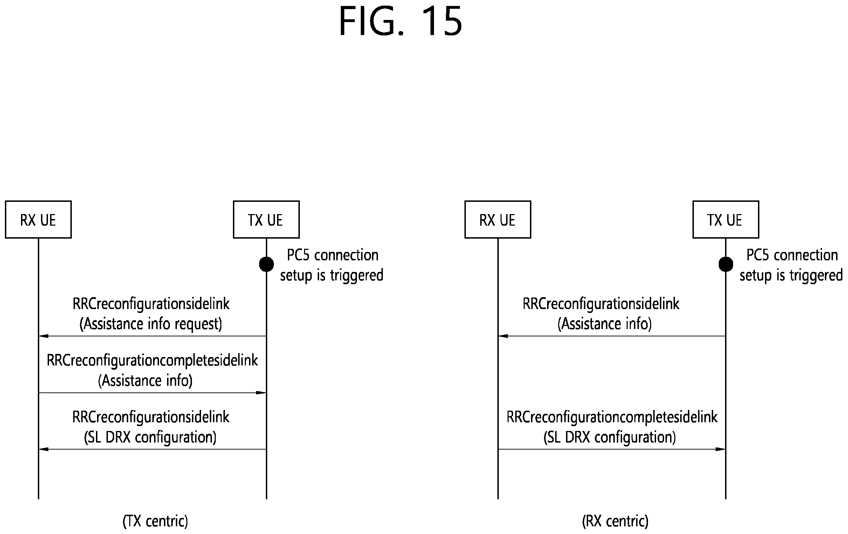

FIG. 15 shows a procedure in which an RRC reconfiguration sidelink message including assistance information or a request for assistance information is transmitted, based on an embodiment of the present disclosure. The embodiment of FIG. 15 may be combined with various embodiments of the present disclosure.

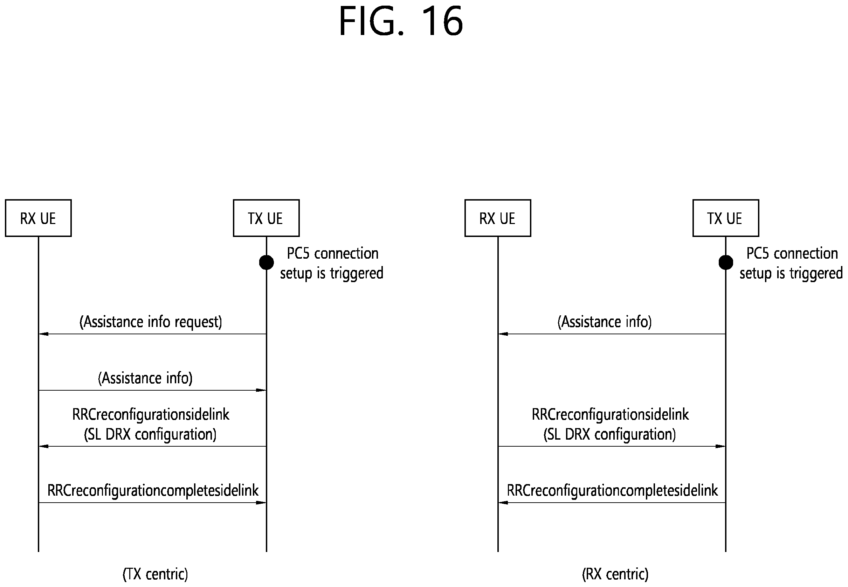

FIG. 16 shows a procedure in which assistance information or a request for assistance information is transmitted, based on an embodiment of the present disclosure. The embodiment of FIG. 16 may be combined with various embodiments of the present disclosure.

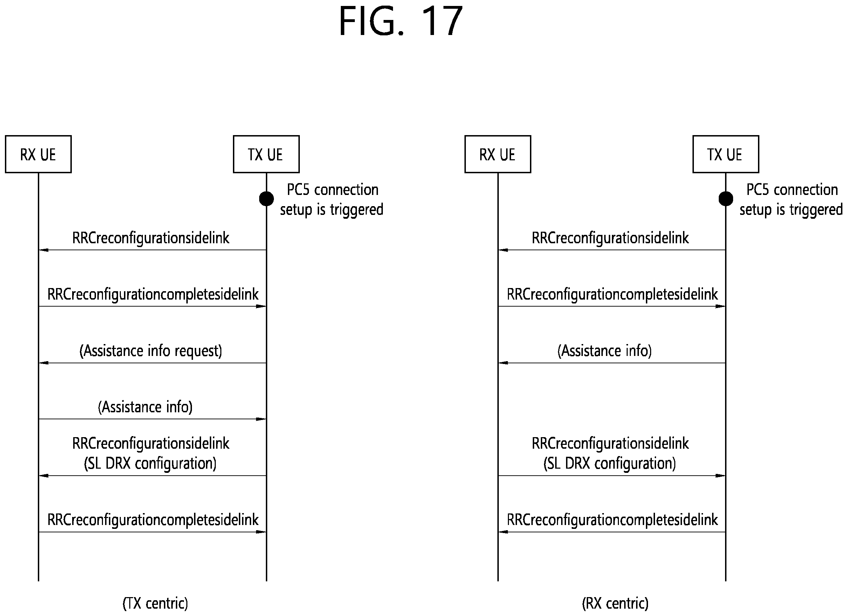

Procedure 3-2. The UE or the peer UE may not perform the operation of transmitting assistance information or requesting assistance information (in the case of FIG. 16) under the following situation and condition. In this case, establishment of a PC5 RRC connection may be performed instead of the operation of transmitting assistance information. In addition, after the PC5-RRC connection is established, the UE or the peer UE may perform the operation of transmitting assistance information or requesting assistance information. This is illustrated in FIG. 17.

FIG. 17 shows a procedure for a UE or a peer UE to transmit or request assistance information after a PC5-RRC connection is established, based on an embodiment of the present disclosure. The embodiment of FIG. 17 may be combined with various embodiments of the present disclosure.

In the course of performing these procedures, the UE may perform the DRX operation based on a common DRX configuration. In this case, a DRX configuration for unicast may not be established, or may be established after the PC5 RRC connection is established.
- The transmission packet delay budget (PDB) of V2X data to be transmitted cannot be satisfied due to the latency related to transmitting assistance information or requesting and receiving assistance information, and/or
- The DRX configuration is not configured since V2X data to be transmitted is a high priority packet or a high reliability packet, and/or
- The DRX configuration is not configured since V2X data to be transmitted is a low latency packet, and/or
- The network does not configure the DRX configuration based on a dedicated signal indication or a SIB, and/or
- The UE or the peer UE does not support the DRX operation based on capability information.

Procedure 3-3. The UE may transmit a PC5-RRC reconfiguration sidelink message to the peer UE. If a DRX configuration is configured, the UE may include the DRX configuration for unicast transmission in the PC5-RRC message (e.g., PC5-RRC reconfiguration sidelink message) and transmit it. If the DRX configuration is not configured, the DRX configuration for unicast transmission of the peer UE may not be included in the PC5-RRC message.

Procedure 3-4. If the UE or the peer UE performs the PC5 RRC connection establishment instead of the operation to transmit the assistance information in procedure 3-2 under the certain condition, as shown in FIG. 17, the UE may perform the operation to transmit or request the assistance information after the PC5-RRC connection is established. Based on this, the UE and the peer UE may configure the DRX configuration for unicast.

### 4. Procedure to quickly configure SL DRX

Procedure 4-1. The PC5 connection may be established between the UE and the peer UE. The UE may then perform a state transition from RRC_IDLE or RRC_INACTIVE to RRC_CONNECTED. Alternatively, the UE or the peer UE may be in the RRC_CONNECTED state.

Procedure 4-2. The UE in the RRC_CONNECTED state may become a TX UE in the following case. For example, if SL data is generated, the UE in the RRC_CONNECTED state may operate as the TX UE. For example, the UE in the RRC_CONNECTED state may operate as the TX UE if a cast type (corresponding to the destination) is unicast from the upper layer. For example, if SL data transmission is initiated, the UE in the RRC_CONNECTED state may operate as the TX UE.

Procedure 4-3-1. The TX UE may directly transmit a transmission request to the peer UE for assistance information for establishing SL DRX (per a UE or per a destination). The peer UE (when the TX UE is RRC_CONNECTED or becomes RRC_CONNECTED) may transmit the assistance information in response, and the UE receiving it may directly transmit the received assistance information to the network.

Procedure 4-3-2. If the UE has previously received or stored assistance information from the peer UE, it may directly transmit the available assistance information to the network. The information related to the assistance information transmitted by the peer UE to the UE may be as follows.
- SL DRX configuration information preferred and/or required by the peer UE
- SL DRX configuration information and (periodic) traffic pattern information (e.g., pattern of traffic generation, period of traffic generation, slot offset, timing offset, traffic size, form of traffic generation (e.g., periodic, aperiodic)), priority information related to traffic, and/or requirements (e.g., target error rate, (remaining) latency budget) recommended by the peer UE to the UE
- Time value information recommended by the peer UE to the UE (e.g., maximum or minimum allowed timer value may be configured for a timer (e.g., drx-onDurationTimer, drx-InactivityTimer, drx-HARQ-RTT-Timer, drx-RetransmissionTimer))
- Value information for drx-onDurationTimer, di-x-InactivityTimer, drx-HARQ-RTT-Timer, di-x-RetransmissionTimer

Procedure 4-4. The TX UE may receive a SL DRX configuration from the network. The SL DRX configuration may be requested from the TX UE on a per direction basis (per a UE or per a destination). The SL DRX configuration may be configured through a separate signaling/indication/message.

Procedure 4-5. The TX UE may configure/transmit the SL DRX configuration to the peer UE only if the SL DRX configuration is configured.

### [RX UE side]

Procedure 4-3. The RX UE (e.g., the peer UE) may transmit assistance information to the TX UE in the following case. For example, if Uu DRX of the RX UE is changed (e.g., an RRC reconfiguration is performed), the RX UE (e.g., the peer UE) may transmit assistance information to the TX UE. For example, if the SL DRX configuration of the RX UE is changed, the RX UE (e.g., the peer UE) may transmit assistance information to the TX UE. For example, if the RX UE that has been in the always active state intends to perform the SL DRX operation, the RX UE (e.g., the peer UE) may transmit assistance information to the TX UE. For example, if the configured SL resource pool of the RX UE is changed, the RX UE (e.g., the peer UE) may transmit assistance information to the TX UE.

### [TX UE side]

Procedure 4-3. The TX UE (e.g., the UE) may transmit a request for assistance information to the RX UE in the following case. For example, if Uu DRX of the TX UE is changed (e.g., an RRC reconfiguration is performed), the TX UE (e.g., the UE) may transmit a request for assistance information to the RX UE. For example, if the SL DRX configuration of the TX UE is changed, the TX UE (e.g., the UE) may transmit a request for assistance information to the RX UE. For example, if the TX UE that has been in the always active state intends to perform the SL DRX operation, the TX UE (e.g., the UE) may transmit a request for assistance information to the RX UE. For example, if the configured SL resource pool of the TX UE is changed, the TX UE (e.g., the UE) may transmit a request for assistance information to the RX UE.

In the present disclosure, the RX UE may be further interpreted as a UE that transmits a DRX configuration (of the UE or the peer UE) and/or a UE that receives a DRX configuration (of the UE or the peer UE) transmitted by the peer UE. Further, the RX UE may be further interpreted as a UE that transmits assistance information (e.g., traffic generation pattern, traffic generation period, traffic generation timing, selected resource information, SL grant information, (related) priority information, etc.) (of the UE or the peer UE) and/or a UE that receives assistance information (of the UE or the peer UE) transmitted by the peer UE.

The proposal of the present disclosure can be applied/extended to/as a method of solving a problem in which loss occurs due to interruption which occurs during Uu BWP switching. In addition, in the case of a plurality of SL BWPs being supported for the UE, the proposal of the present disclosure can be applied/extended to/as a method of solving a problem in which loss occurs due to interruption which occurs during SL BWP switching.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mmWave SL operation.

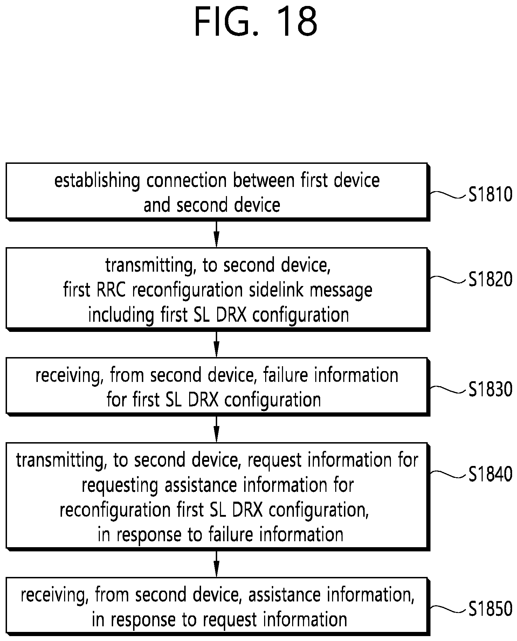

FIG. 18 shows a method for performing wireless communication by a first device, based on an embodiment of the present disclosure. The embodiment of FIG. 18 may be combined with various embodiments of the present disclosure.

Referring to FIG. 18, in step S1810, the first device may establish a connection between the first device and a second device. In step S1820, the first device may transmit, to a second device, a first radio resource control (RRC) reconfiguration sidelink message including a first sidelink (SL) discontinuous reception (DRX) configuration. For example, the first SL DRX configuration may include information related to a SL DRX cycle and information related to a first active time. In step S1830, the first device may receive, from the second device, failure information for the first SL DRX configuration. In step S1840, the first device may transmit, to the second device, request information for requesting assistance information for reconfiguration the first SL DRX configuration, in response to the failure information. In step S1850, the first device may receive, from the second device, the assistance information, in response to the request information.

For example, the assistance information may include information related to a second SL DRX configuration preferred by the second device.

For example, the failure information may be an RRC reconfiguration failure sidelink message.

For example, based on the failure information, a third SL DRX configuration including information related to a third SL DRX cycle and information related to a third active time may be applied between the first device and the second device. Additionally, for example, the first device may transmit, to the second device, first sidelink control channel (SCI) for scheduling of a physical sidelink shared channel (PSSCH) and second SCI through a physical sidelink control channel (PSCCH) within the third active time, and the first device may transmit, to the second device, the second SCI or data through the PSSCH within the third active time. For example, the third SL DRX configuration may be a common DRX configuration or a default DRX configuration. For example, the third SL DRX configuration may be a SL DRX configuration used for transmitting the first RRC reconfiguration sidelink message to the second device. Additionally, for example, the first device may transmit, to the second device, information representing that the third SL DRX configuration is applied.

Additionally, for example, the first device may transmit, to a base station, the failure information for the first SL DRX configuration, and the first device may receive, from the base station, a fourth SL DRX configuration including information related to a fourth SL DRX cycle and information related to a fourth active time, in response to the failure information, and the first device may transmit, to the second device, a second RRC reconfiguration sidelink message including the fourth SL DRX configuration.

Specifically, for example, the assistance information received by the first device from the second device may include information related to a DRX configuration preferred by the second device and/or information related to a DRX configuration not preferred by the second device. For example, the information related to the DRX configuration preferred by the second device may include at least one of information related to a DRX cycle preferred by the second device, information related to an active time preferred by the second device, information related to an inactive time preferred by the second device, and/or information related to a DRX pattern preferred by the second device. For example, the information related to the DRX configuration not preferred by the second device may include at least one of information related to a DRX cycle not preferred by the second device, information related to an active time not preferred by the second device, information related to an inactive time not preferred by the second device, and/or information related to a DRX pattern not preferred by the second device. For example, the second device may transmit the assistance information to the first device through SCI, a MAC CE or an RRC message (e.g., UE assistance information) including the information related to the DRX configuration preferred by the second device and/or the information related to the DRX configuration not preferred by the second device. In this case, the first device receiving the assistance information from the second device may transmit failure information for the first SL DRX configuration to the base station. Specifically, for example, the failure information for the first SL DRX configuration may include at least one of information related to a DRX configuration preferred by the second device, information related to a DRX configuration not preferred by the second device, information related to a DRX configuration preferred by the first device, and/or information related to a DRX configuration not preferred by the first device. Herein, for example, the information related to the DRX configuration may include at least one of information related to a DRX cycle, information related to an active time, information related to an inactive time, and/or information related to a DRX pattern. As described above, in order to reduce the signaling overhead, a mapping relationship between the DRX configuration preferred by the first device or the second device and/or the DRX configuration not preferred by the first device or the second device and at least one index may be configured or pre-configured for the first device, the second device and the base station.

Additionally, for example, if the base station receives the failure information for the first SL DRX configuration from the first device, the base station may determine a new DRX configuration based on at least one of the information related to the DRX configuration preferred by the second device, the information related to the DRX configuration not preferred by the second device, the information related to the DRX configuration preferred by the first device, and/or the information related to the DRX configuration not preferred by the first device. For example, the network may determine the new DRX configuration based on at least one of the information related to the DRX configuration preferred by the second device, the information related to the DRX configuration not preferred by the second device, the information related to the DRX configuration preferred by the first device, the information related to the DRX configuration not preferred by the first device, information related to a DRX configuration preferred by a third device, and/or information related to a DRX configuration not preferred by the third device. Herein, for example, the third device may be another device within coverage of the base station other than the first device and the second device. Thereafter, the base station may transmit the new DRX configuration to the first device. In addition, the first device may transmit the new DRX configuration received from the base station to the second device. In this way, the base station can determine DRX configuration(s) preferred or non-preferred by at least one device within its coverage, and the base station can determine the DRX configuration by comprehensively considering the channel congestion situation, the power saving operation preferred by the at least one device, etc. Thus, channel congestion can be reduced while maximizing the power saving efficiency of the device.

Additionally, for example, the first device may generate, based on the assistance information, a fifth SL DRX configuration including information related to a fifth SL DRX cycle and information related to a fifth active time, and the first device may transmit, to the second device, a third RRC reconfiguration sidelink message including the fifth SL DRX configuration.

For example, the failure information may be received from the second device by being included in an RRC reconfiguration failure sidelink message. For example, the RRC reconfiguration failure sidelink message may include information related to a second SL DRX configuration preferred by the second device.

For example, based on expiration of a timer related to SL DRX, a common SL DRX configuration including information related to a common SL DRX cycle and information related to a common active time may be applied between the first device and the second device.

The proposed method can be applied to devices based on various embodiments of the present disclosure. First, the processor 102 of the first device 100 may establish a connection between the first device and a second device. In addition, the processor 102 of the first device 100 may control the transceiver 106 to transmit, to a second device, a first radio resource control (RRC) reconfiguration sidelink message including a first sidelink (SL) discontinuous reception (DRX) configuration. For example, the first SL DRX configuration may include information related to a SL DRX cycle and information related to a first active time. In addition, the processor 102 of the first device 100 may control the transceiver 106 to receive, from the second device, failure information for the first SL DRX configuration. In addition, the processor 102 of the first device 100 may control the transceiver 106 to transmit, to the second device, request information for requesting assistance information for reconfiguration the first SL DRX configuration, in response to the failure information. In addition, the processor 102 of the first device 100 may control the transceiver 106 to receive, from the second device, the assistance information, in response to the request information.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: establish a connection between the first device and a second device; transmit, to a second device, a first radio resource control (RRC) reconfiguration sidelink message including a first sidelink (SL) discontinuous reception (DRX) configuration, the first SL DRX configuration including information related to a SL DRX cycle and information related to a first active time; receive, from the second device, failure information for the first SL DRX configuration; transmit, to the second device, request information for requesting assistance information for reconfiguration the first SL DRX configuration, in response to the failure information; and receive, from the second device, the assistance information, in response to the request information.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: establish a connection between the first UE and a second UE; transmit, to a second UE, a first radio resource control (RRC) reconfiguration sidelink message including a first sidelink (SL) discontinuous reception (DRX) configuration, the first SL DRX configuration including information related to a SL DRX cycle and information related to a first active time; receive, from the second UE, failure information for the first SL DRX configuration; transmit, to the second UE, request information for requesting assistance information for reconfiguration the first SL DRX configuration, in response to the failure information; and receive, from the second UE, the assistance information, in response to the request information.

Based on an embodiment of the present disclosure, a non-transitory computer-readable storage medium storing instructions may be provided. For example, the instructions, when executed, may cause a first device to: establish a connection between the first device and a second device; transmit, to a second device, a first radio resource control (RRC) reconfiguration sidelink message including a first sidelink (SL) discontinuous reception (DRX) configuration, the first SL DRX configuration including information related to a SL DRX cycle and information related to a first active time; receive, from the second device, failure information for the first SL DRX configuration; transmit, to the second device, request information for requesting assistance information for reconfiguration the first SL DRX configuration, in response to the failure information; and receive, from the second device, the assistance information, in response to the request information.

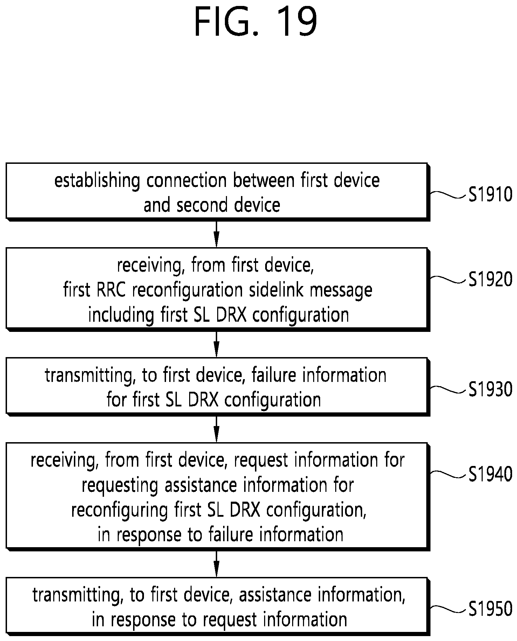

FIG. 19 shows a method for performing wireless communication by a second device, based on an embodiment of the present disclosure. The embodiment of FIG. 19 may be combined with various embodiments of the present disclosure.

Referring to FIG. 19, in step S1910, the second device may establish a connection between a first device and the second device. In step S1920, the second device may receive, from the first device, a first radio resource control (RRC) reconfiguration sidelink message including a first sidelink (SL) discontinuous reception (DRX) configuration, the first SL DRX configuration including information related to a SL DRX cycle and information related to a first active time. In step S1930, the second device may transmit, to the first device, failure information for the first SL DRX configuration. In step S1940, the second device may receive, from the first device, request information for requesting assistance information for reconfiguring the first SL DRX configuration, in response to the failure information. In step S1950, the second device may transmit, to the first device, the assistance information, in response to the request information.

The proposed method can be applied to devices based on various embodiments of the present disclosure. First, the processor 202 of the second device 200 may establish a connection between a first device and the second device. In addition, the processor 202 of the second device 200 may control the transceiver 206 to receive, from the first device, a first radio resource control (RRC) reconfiguration sidelink message including a first sidelink (SL) discontinuous reception (DRX) configuration, the first SL DRX configuration including information related to a SL DRX cycle and information related to a first active time. In addition, the processor 202 of the second device 200 may control the transceiver 206 to transmit, to the first device, failure information for the first SL DRX configuration. In addition, the processor 202 of the second device 200 may control the transceiver 206 to receive, from the first device, request information for requesting assistance information for reconfiguring the first SL DRX configuration, in response to the failure information. In addition, the processor 202 of the second device 200 may control the transceiver 206 to transmit, to the first device, the assistance information, in response to the request information.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: establish a connection between a first device and the second device; receive, from the first device, a first radio resource control (RRC) reconfiguration sidelink message including a first sidelink (SL) discontinuous reception (DRX) configuration, the first SL DRX configuration including information related to a SL DRX cycle and information related to a first active time; transmit, to the first device, failure information for the first SL DRX configuration; receive, from the first device, request information for requesting assistance information for reconfiguring the first SL DRX configuration, in response to the failure information; and transmit, to the first device, the assistance information, in response to the request information.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: establish a connection between a first UE and the second UE; receive, from the first UE, a first radio resource control (RRC) reconfiguration sidelink message including a first sidelink (SL) discontinuous reception (DRX) configuration, the first SL DRX configuration including information related to a SL DRX cycle and information related to a first active time; transmit, to the first UE, failure information for the first SL DRX configuration; receive, from the first UE, request information for requesting assistance information for reconfiguring the first SL DRX configuration, in response to the failure information; and transmit, to the first UE, the assistance information, in response to the request information.

Based on an embodiment of the present disclosure, a non-transitory computer-readable storage medium storing instructions may be provided. For example, the instructions, when executed, may cause a second device to: establish a connection between a first device and the second device; receive, from the first device, a first radio resource control (RRC) reconfiguration sidelink message including a first sidelink (SL) discontinuous reception (DRX) configuration, the first SL DRX configuration including information related to a SL DRX cycle and information related to a first active time; transmit, to the first device, failure information for the first SL DRX configuration; receive, from the first device, request information for requesting assistance information for reconfiguring the first SL DRX configuration, in response to the failure information; and transmit, to the first device, the assistance information, in response to the request information.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

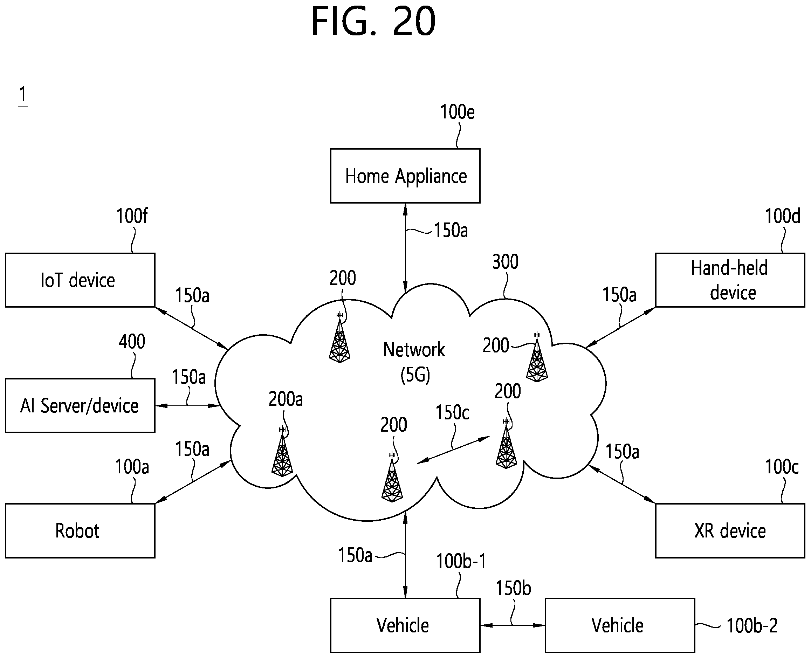

FIG. 20 shows a communication system 1, based on an embodiment of the present disclosure. The embodiment of FIG. 20 may be combined with various embodiments of the present disclosure.

Referring to FIG. 20, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

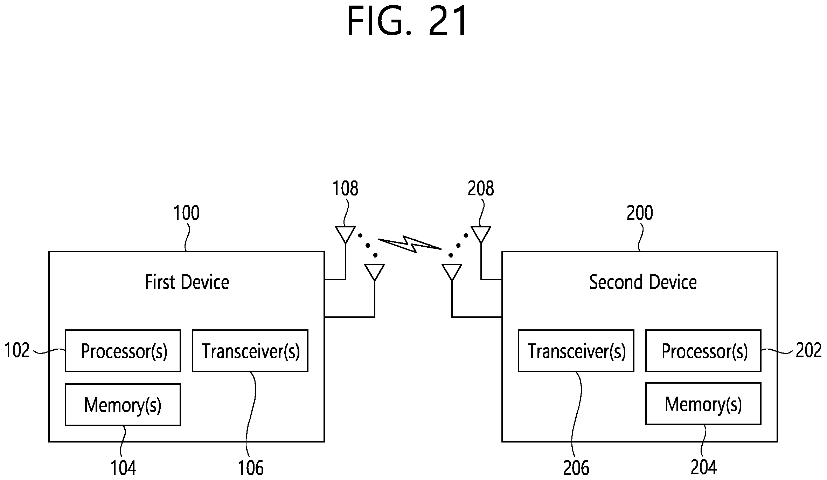

FIG. 21 shows wireless devices, based on an embodiment of the present disclosure. The embodiment of FIG. 21 may be combined with various embodiments of the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

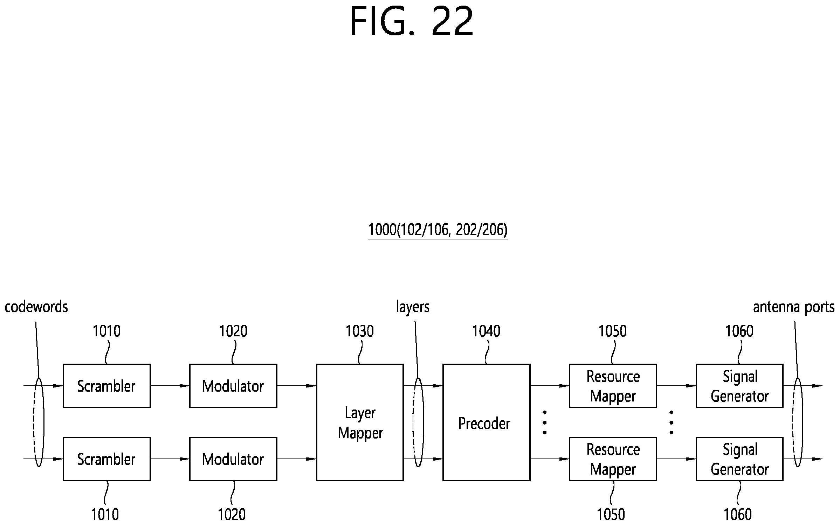

FIG. 22 shows a signal process circuit for a transmission signal, based on an embodiment of the present disclosure. The embodiment of FIG. 22 may be combined with various embodiments of the present disclosure.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

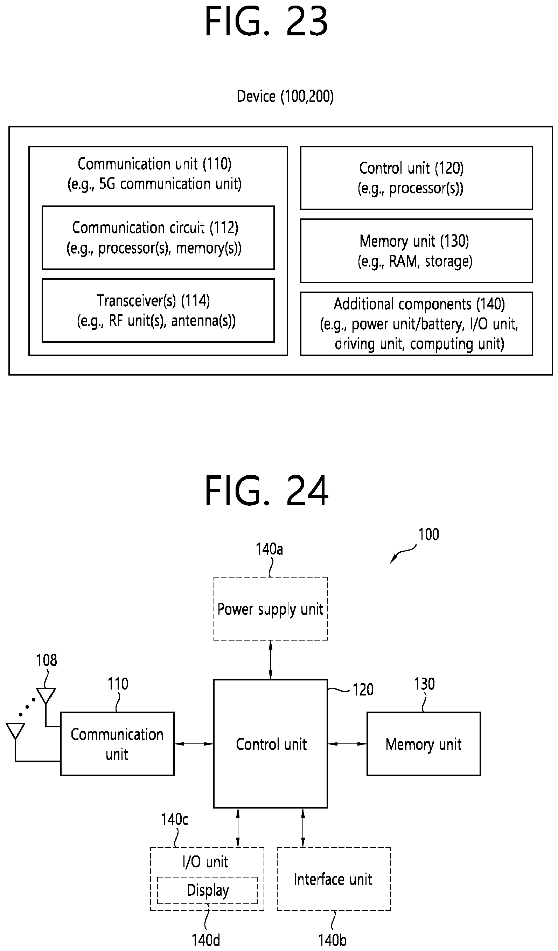

FIG. 23 shows another example of a wireless device, based on an embodiment of the present disclosure. The wireless device may be implemented in various forms according to a use-case/service (refer to FIG. 20). The embodiment of FIG. 23 may be combined with various embodiments of the present disclosure.

Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

FIG. 24 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 24 may be combined with various embodiments of the present disclosure.

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

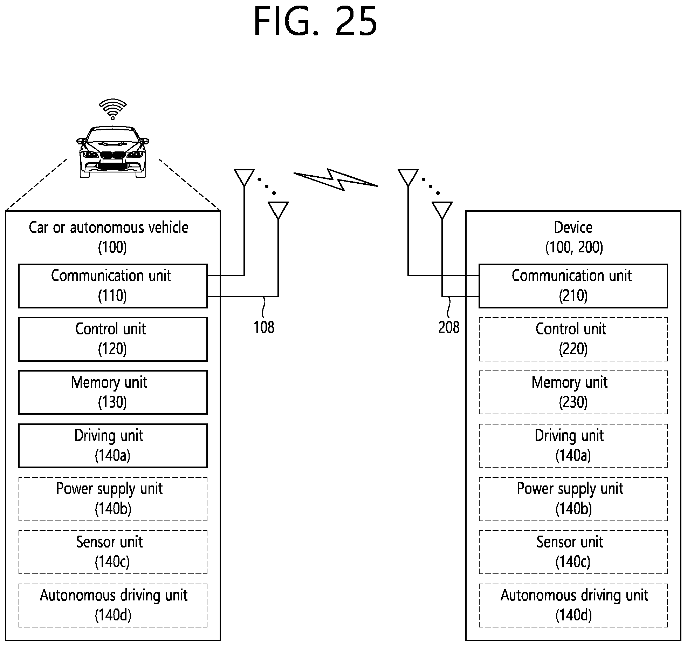

FIG. 25 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 25 may be combined with various embodiments of the present disclosure.

Referring to FIG. 25, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
establishing a connection between the first device and a second device;
transmitting, to a second device, a first radio resource control (RRC) reconfiguration sidelink message including a first sidelink (SL) discontinuous reception (DRX) configuration, the first SL DRX configuration including information related to a SL DRX cycle and information related to a first active time;
receiving, from the second device, failure information for the first SL DRX configuration;
transmitting, to the second device, request information for requesting assistance information for reconfiguration the first SL DRX configuration, in response to the failure information; and
receiving, from the second device, the assistance information, in response to the request information.

2. The method of claim 1, wherein the assistance information includes information related to a second SL DRX configuration preferred by the second device.

3. The method of claim 1, wherein the failure information is an RRC reconfiguration failure sidelink message.

4. The method of claim 1, wherein, based on the failure information, a third SL DRX configuration including information related to a third SL DRX cycle and information related to a third active time is applied between the first device and the second device.

5. The method of claim 4, further comprising:
transmitting, to the second device, first sidelink control channel (SCI) for scheduling of a physical sidelink shared channel (PSSCH) and second SCI through a physical sidelink control channel (PSCCH) within the third active time; and
transmitting, to the second device, the second SCI or data through the PSSCH within the third active time.

6. The method of claim 4, wherein the third SL DRX configuration is a common DRX configuration or a default DRX configuration.

7. The method of claim 4, wherein the third SL DRX configuration is a SL DRX configuration used for transmitting the first RRC reconfiguration sidelink message to the second device.

8. The method of claim 4, further comprising:
transmitting, to the second device, information representing that the third SL DRX configuration is applied.

9. The method of claim 1, further comprising:
transmitting, to a base station, the failure information for the first SL DRX configuration;
receiving, from the base station, a fourth SL DRX configuration including information related to a fourth SL DRX cycle and information related to a fourth active time, in response to the failure information; and
transmitting, to the second device, a second RRC reconfiguration sidelink message including the fourth SL DRX configuration.

10. The method of claim 1, further comprising:
generating, based on the assistance information, a fifth SL DRX configuration including information related to a fifth SL DRX cycle and information related to a fifth active time; and
transmitting, to the second device, a third RRC reconfiguration sidelink message including the fifth SL DRX configuration.

11. The method of claim 1, wherein the failure information is received from the second device by being included in an RRC reconfiguration failure sidelink message.

12. The method of claim 11, wherein the RRC reconfiguration failure sidelink message includes information related to a second SL DRX configuration preferred by the second device.

13. The method of claim 1, wherein, based on expiration of a timer related to SL DRX, a common SL DRX configuration including information related to a common SL DRX cycle and information related to a common active time is applied between the first device and the second device.

14. A first device adapted to perform wireless communication, the first device comprising:
one or more memories storing instructions;
one or more transceivers; and
one or more processors connected to the one or more memories and the one or more transceivers, wherein the one or more processors execute the instructions to:
establish a connection between the first device and a second device;
transmit, to a second device, a first radio resource control (RRC) reconfiguration sidelink message including a first sidelink (SL) discontinuous reception (DRX) configuration, the first SL DRX configuration including information related to a SL DRX cycle and information related to a first active time;
receive, from the second device, failure information for the first SL DRX configuration;
transmit, to the second device, request information for requesting assistance information for reconfiguration the first SL DRX configuration, in response to the failure information; and
receive, from the second device, the assistance information, in response to the request information.

15. An apparatus adapted to control a first user equipment (UE), the apparatus comprising:
one or more processors; and
one or more memories operably connected to the one or more processors and storing instructions, wherein the one or more processors execute the instructions to:
establish a connection between the first UE and a second UE;
transmit, to a second UE, a first radio resource control (RRC) reconfiguration sidelink message including a first sidelink (SL) discontinuous reception (DRX) configuration, the first SL DRX configuration including information related to a SL DRX cycle and information related to a first active time;
receive, from the second UE, failure information for the first SL DRX configuration;
transmit, to the second UE, request information for requesting assistance information for reconfiguration the first SL DRX configuration, in response to the failure information; and
receive, from the second UE, the assistance information, in response to the request information.

16. A non-transitory computer-readable storage medium storing instructions that, when executed, cause a first device to:
establish a connection between the first device and a second device;
transmit, to a second device, a first radio resource control (RRC) reconfiguration sidelink message including a first sidelink (SL) discontinuous reception (DRX) configuration, the first SL DRX configuration including information related to a SL DRX cycle and information related to a first active time;
receive, from the second device, failure information for the first SL DRX configuration;
transmit, to the second device, request information for requesting assistance information for reconfiguration the first SL DRX configuration, in response to the failure information; and
receive, from the second device, the assistance information, in response to the request information.

17. A method for performing wireless communication by a second device, the method comprising:
establishing a connection between a first device and the second device;
receiving, from the first device, a first radio resource control (RRC) reconfiguration sidelink message including a first sidelink (SL) discontinuous reception (DRX) configuration, the first SL DRX configuration including information related to a SL DRX cycle and information related to a first active time;
transmitting, to the first device, failure information for the first SL DRX configuration;
receiving, from the first device, request information for requesting assistance information for reconfiguring the first SL DRX configuration, in response to the failure information; and
transmitting, to the first device, the assistance information, in response to the request information.

18. A second device adapted to perform wireless communication, the second device comprising:
one or more memories storing instructions;
one or more transceivers; and
one or more processors connected to the one or more memories and the one or more transceivers, wherein the one or more processors execute the instructions to:
establish a connection between a first device and the second device;
receive, from the first device, a first radio resource control (RRC) reconfiguration sidelink message including a first sidelink (SL) discontinuous reception (DRX) configuration, the first SL DRX configuration including information related to a SL DRX cycle and information related to a first active time;
transmit, to the first device, failure information for the first SL DRX configuration;
receive, from the first device, request information for requesting assistance information for reconfiguring the first SL DRX configuration, in response to the failure information; and
transmit, to the first device, the assistance information, in response to the request information.

19. An apparatus adapted to control a second user equipment (UE), the apparatus comprising:
one or more processors; and
one or more memories operably connected to the one or more processors and storing instructions, wherein the one or more processors execute the instructions to:
establish a connection between a first UE and the second UE;
receive, from the first UE, a first radio resource control (RRC) reconfiguration sidelink message including a first sidelink (SL) discontinuous reception (DRX) configuration, the first SL DRX configuration including information related to a SL DRX cycle and information related to a first active time;
transmit, to the first UE, failure information for the first SL DRX configuration;
receive, from the first UE, request information for requesting assistance information for reconfiguring the first SL DRX configuration, in response to the failure information; and
transmit, to the first UE, the assistance information, in response to the request information.

20. A non-transitory computer-readable storage medium storing instructions that, when executed, cause a second device to:
establish a connection between a first device and the second device;
receive, from the first device, a first radio resource control (RRC) reconfiguration sidelink message including a first sidelink (SL) discontinuous reception (DRX) configuration, the first SL DRX configuration including information related to a SL DRX cycle and information related to a first active time;
transmit, to the first device, failure information for the first SL DRX configuration;
receive, from the first device, request information for requesting assistance information for reconfiguring the first SL DRX configuration, in response to the failure information; and
transmit, to the first device, the assistance information, in response to the request information.
